# EUROPÄISCHE PATENTSCHRIFT

(11) **EP 2 215 153 B1**
(45) Veröffentlichungstag und Bekanntmachung des Hinweises auf die Patenterteilung: **13.04.2011**
(21) Anmeldenummer: 08853432.6
(22) Anmeldetag: 21.11.2008
(51) Int. Cl.: C08J 9/12

(54) **SELBSTHAFTENDE EXPANDIERBARE SILICONZUSAMMENSETZUNGEN FÜR DIE HERSTELLUNG VON SILICONSCHAUM-VERBUNDTEILEN**
SELF-ADHESIVE EXPANDABLE SILICONE COMPOSITIONS FOR THE PRODUCTION OF SILICONE FOAM COMPOSITE PARTS
COMPOSITIONS DE SILICONE EXPANSIBLES ET AUTOADHÉSIVES POUR LA FABRICATION DE PIÈCES COMPOSITES EN MOUSSE DE SILICONE

(30) Priorität: 26.11.2007 DE 102007047864
(43) Veröffentlichungstag der Anmeldung: 11.08.2010
(73) Patentinhaber: Wacker Chemie AG, 81737 München (DE)
(72) Erfinder: WEIDINGER, Jürgen, 48167 Münster (DE)
(74) Vertreter: Mieskes, Klaus Theoderich
(86) Internationale Anmeldenummer: PCT/EP2008/065975
(87) Internationale Veröffentlichungsnummer: WO 2009/068478

(56) Entgegenhaltungen:
- EP-A- 0 686 671
- WO-A-2007/054463
- DE-A1- 4 101 884

## Beschreibung

Die Erfindung betrifft selbsthaftende, expandierbare Siliconzusammensetzungen, ihre Herstellung sowie die durch Expansion und Vernetzung erhaltenen Materialien.

Selbsthaftende Silicone sind eine Herausforderung für den Entwickler, da Silicone aufgrund ihrer Oberflächenenergie und ihrer Morphologie gegenüber Haftung eher inert sind. Daher gibt es nur wenige Arbeiten zu diesem Thema, in welchen durch die Modifikation der Siliconzusammensetzung versucht wird, das Siliconpolymer (Polysiloxan) zur Haftung zu bringen, um aufwändige und mit Unsicherheiten behaftete Vorarbeiten wie beispielsweise Vorbehandeln, Primern etc. zu vermeiden, wie in den Schriften EP 1 106 662 B1, EP 0686 671 A2 und EP 0 875 536 offenbart.

Die automatische Herstellung von Siliconschaum-Verbundartikeln -also von Teilen, welche durch automatische Haftung von expandiertem Silicon zum Trägermaterial zustande kommen- ist im Sinne von Wirtschaftlichkeit und Umwelt (keine Lösemittelfracht durch Primern, Energieeinsparung) wünschenswert, aber bisher nicht gelungen. Hierfür gibt es mehrere Gründe.
1. Durch die Entstehung von Hohlräumen (Blasen) wird die zum Haftungsaufbau notwendige Migration von Haftvermittlern zur Träger(Substrat)oberfläche behindert bzw. der Migrationsweg stark verlängert, gleichzeitig verschmälert.
2. Durch die Entstehung von Blasen wird auch an der Substrat-Kontaktfläche die Kontaktfläche geschwächt und die mögliche Oberfläche für den Haftungsaufbau massiv verkleinert.
3. In vielen Fällen gehen die zum Expandieren verwendeten Treibmittel eine chemische und/oder physikalische Wechselwirkung mit den Haftvermittlern ein und deren Wirkung wird dadurch negativ beeinflusst.

In der Bekleidungs- und Textilindustrie werden für die Herstellung von Erzeugnissen zum Zwecke der Isolierung und des Schutzes häufig expandierte Laminate oder Einsätze verwendet.

Diese Einsätze oder Laminate von Funktionsbekleidung, welche isolierende oder in sonstiger Art abschirmende Eigenschaften aufweist, werden heutzutage meist aus geschäumtem Chloroprenkautschuk (im Folgenden CR), auch unter den Namen Neoprene® bekannt, gefertigt. CR ist ein organischer Kautschuk mit Halogengehalt (Chlor). Aufgrund dessen wird bei seiner Zersetzung oder beim Abbau giftiger Chlorwasserstoff frei. Chloropren wird außerdem mit geruchsintensiven und chemisch hochreaktiven, d.h. kritischen, Vernetzern vulkanisiert. Deren vollständige Entfernung bzw. die völlige Entfernung der Folgeprodukte aus dem Vulkanisat (Gummi) ist chemisch und physikalisch unmöglich. Die Expansion (Schäumung) von Chloropren geschieht ebenfalls mit chemisch reaktiven, geruchsintensiven und kritischen Agenzien. Die Entfernung deren Folgeprodukte ist ebenfalls nicht vollständig möglich.

Nichtsdestotrotz wird CR vor allem als Schaum in Funktionsbekleidung, wie Tauch-, Schwimm- und Surfanzügen, Motorrad-, Angler-, Ski- und Schutzbekleidung etc. eingesetzt. CR-Schaum weist hierbei folgende Vorteile auf:
- relativ gute Ozonbeständigkeit;
- relativ gute Salzwasserbeständigkeit;
- leichter Schaum;
- akzeptable Dehnbarkeit;
- geringe Herstellkosten.

Man toleriert mangels funktionierender Alternativen alle Nachteile, welche CR in diesen Anwendungen aufweist:
- nicht geruchsfrei beispielsweise bei Lagerung bei etwas erhöhter Temperatur
- in geschlossenen Räumen, beispielsweise im Auto, werden stark unangenehme Gerüche freigesetzt;
- nicht frei von Reaktionsfolgeprodukten der Vulkanisation und der Expansion;
- nicht sehr beständig gegen kombinierte, typische Outdoor-Einflüsse wie UV, Hitze, Kälte;
- die Stabilisierung gegen Strahlungs- und Hitzeeinwirkung nur unter Zuhilfenahme von fragwürdigen Stabilisatoren wie beispielsweise Verluststabilisatoren;
- Erreichen niedriger, gut dehnbarer Härten nur unter Zuhilfenahme von Weichmachern, dadurch wiederum Herabsetzen von Beständigkeit und anderer mechanischer Parameter;
- mechanisch mäßiges Niveau mit hoher bleibender Verformung und somit hoher Tension- und Compression Set (Druck- und Zugverformung);
- dynamisch wenig kombiniert belastbar, wie bei Knick- oder Zugbelastung in Hitze, Kälte oder unter Einwirkung von Medien;
- eingeschränkt wasserundurchlässig, da nicht wasserabstoßend;
- auf Dauer unangenehm zu tragen, da nur sehr gering gas- und dampfdurchlässig. US 7,078,453 beschreibt sogar die Verwendung als Gassperre, sie sind somit nicht atmungsaktiv, und damit kommt es zu Schweißakkumulation;
- Entstehen von dichtem, giftigem, halogenhaltigem Rauch im Brandfall; schwerer brennbare Einstellung nur unter Zuhilfenahme weiterer halogen(Brom)haltiger Substanzen.

Bisherige Verwendungen von geschäumten Siloxan-haltigen Massen im Bekleidungsbereich beschränkten sich auf spezielle Teile, z.B. Laminate mit insgesamt sehr aufwändigen Herstellungsmethoden. So wird in JP 7292504 A2 für die Herstellung lediglich von Schwimmanzug-Cups ein Siliconschaum-Vorformling auf Thermoplast aufgebracht. In KR 20010077825 A wird ein Silicon auf Wachspapier vorgeschäumt und mit einem vorher Siliconhaftbeschichteten Textil verklebt, um eine Art Kunstleder zu erhalten. JP 63282381 A2 verfährt ähnlich aufwändig, indem Siliconschaum mit Hilfe von peroxidvernetztem (daher geruchsintensivem) Festsilicon auf Textil verklebt wird. GB 1273468 A erwähnt u.a. Siliconschaum für Laminate, welche anschließend mit Harz imprägniert werden. DE 41 01 884 A1 schließlich erwähnt Schaum aus raumtemperatur-vernetzendem (daher sehr langsamem) RTV-Silicon, welches auf Textil aufgesprayt wird.

Allen im Stand der Technik erwähnten und praktizierten Methoden bzw. allen beanspruchten Materialien -inklusive der allgemein bekannten Anwendungen, Materialien und Methoden wie man sie von CR her kennt- sind die folgenden Nachteile gemein:
- Verwendung von kritischen (Geruch, Rückstände) oder von wenig effizienten (RTV) Treibmitteln;
- unökonomische, zudem Fehlerquellen beinhaltende Prozesse, entweder durch aufwändige Mehrschritt-Methoden und/oder durch die Verwendung langsam vernetzender Siloxane.

Aufgabe der vorliegenden Erfindung war es daher, Siliconzusammensetzungen zur Verfügung zu stellen, welche sowohl problemlos expandierbar sind, als auch trotz Blasenbildung ebenso rasch eine sehr gute Haftung zum Substrat aufbauen und welche die oben beschriebenen Nachteile wie Geruchsbelästigung, geringe Beständigkeit usw. nicht aufweisen.

Gegenstand der Erfindung ist eine Siliconzusammensetzung enthaltend
(A) mindestens eine siliciumorganische Verbindung welche Reste aufweist, die zur Vernetzung geeignet sind,
(B) mindestens eine verstärkenden Füllstoff ausgewählt aus der Gruppe enhaltend behandelte oder unbehandelte pyrogene oder gefällte Kieselsäuren,
(C) mindestens ein Treibmittel,
(D) mindestens ein geeignetes Vernetzungssystem ausgewählt aus der Gruppe enthaltend Kondensationsvernetzung, peroxidinduziert radikalische oder Edelmetallkomplex-katalysierte Additionsvernetzung,
(E) zumindest ein Silikat mit thermisch oder hydrolytisch spaltbaren Abgangsgruppen O-R⁷, ausgewählt aus der Gruppe enthaltend Silikatsalze oder niedermolekulare Silikatverbindungen, wobei R⁷ ein H, ein organischer Rest oder statt O-R⁷ ein Halogen als Abgangsgruppe bedeutet,
(F) zumindest ein harzbildendes Monomer oder Oligomer mit linearer Struktur, mit der Maßgabe, dass Silikate nicht umfasst sind,
dadurch gekennzeichnet, dass als Treibmittel (C) eine Verbindung enhaltend Interchalat- oder Kristallflüssigkeit verwendet wird, ausgewählt wird aus der Gruppe enthaltend,
- Salze,
- Silikate,
- Proteine, und
- Zucker.

Bei den erfindungsgemäßen Zusammensetzungen kann es sich um Einkomponenten-Massen wie auch um Mehrkomponenten-Massen handeln. In letzterem Fall können die Komponenten der erfindungsgemäßen Massen alle Bestandteile in beliebiger Kombination enthalten.

Vorzugsweise enthalten die erfindungsgemäßen siliconhaltigen Massen als Bestandteil (A) eine aliphatisch ungesättigte Organosiliciumverbindung, wobei alle bisher in vernetzenden Massen verwendeten, aliphatisch ungesättigen Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Das Molekulargewicht des Bestandteils (A) kann in weiten Grenzen variieren, etwa zwischen 10**²** und 10**⁶** g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10**⁵** g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R**₃**SiO**_{1/2}**, R**¹**R**₂**SiO**_{1/2}**, R**¹**RSiO**_{2/2}** und R**₂**SiO**_{2/2}** zusammengesetzt, wobei R, R¹ beliebige organische oder anorganische Substituenten sein können, bevorzugt halogen- und/oder organosubstituierte lineare und verzweigte Siloxane mit 1 bis 10 Si-O-Einheiten, besonders bevorzugt organosubstituierte Siloxane mit durch Abgangsgruppen abgesättigten end- und seitständigen OH-Funktionen. Verzweigte und netzwerkartige Polysiloxane enthalten zusätzlich trifunktionelle und/oder tetrafunktionelle Einheiten, wobei solche der Formeln RSiO**_{3/2}**, R**¹**SiO**_{3/2}** und S·iO**_{4/2}** bevorzugt sind, wobei R, R¹ die oben genannte Bedeutung tragen. Selbstverständlich können auch Mischungen unterschiedlicher, den Kriterien des Bestandteils (A) genügender Siloxane eingesetzt werden.

Bevorzugt als Komponente (A) ist die Verwendung vinylfunktioneller, im Wesentlichen linearer Polydiorganosiloxane mit einer Viskosität von 0,01 bis 500.000 Pa·s, bevorzugt 0,1 bis 100.000 Pa·s, besonders bevorzugt 100 bis 100.000 Pa·s, jeweils bei 25°C.

Der Gehalt der erfindungsgemäßen vernetzbaren Masse an Komponente (A) liegt im Bereich von bevorzugt 40 bis 95 Gew.-%, besonders bevorzugt bei 35 bis 85 Gew.-%.

Als Füllstoffe (B) können alle Füllstoffe aus der Gruppe der Silikate eingesetzt werden, die auch bisher in siliconhaltigen Massen eingesetzt worden sind. Beispiele für verstärkende Füllstoffe, die als Komponente (B) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Besonders bevorzugt als Komponente (B) sind Kieselsäuren, welche nicht belegte OH-Gruppen oder mit Organosilylharzen substituierte OH-Gruppen enthalten, also noch teilweise hydrophilen Charakter aufweisen bzw. durch Abspaltung von organischen Abgangsgruppen (-OMe, OEt, OAc etc.) *in situ* hydrophile Gruppen bilden können.

Der Gehalt der erfindungsgemäßen vernetzbaren Masse an aktiv verstärkendem Füllstoff (B) liegt bevorzugt im Bereich von 0,5 bis 70 Gew.-%, besonders bevorzugt bei 5 bis 50 Gew.-%.

Die erfindungsgemäß eingesetzten Komponenten (A) und (B) sind handelsübliche Produkte bzw. nach in der Chemie gängigen Verfahren herstellbar.

Werden als Treibmittel (C) Salze verwendet so sind Alkali-, Erdalakali- und Seltenerdmetallsalze bevorzugt. Besonders bevorzugt werden Kombinationen von Kationen Cs⁺, Rb⁺, NH₄⁺, Na⁺, Li⁺, Ca²⁺, Ba²⁺, Sr²⁺, Mg²⁺, Al³⁺, Fe⁺, Cr³⁺ mit Anionen NO₃⁻, CN⁻, I⁻, Br⁻, F⁻, CO₃²⁻, SO₄²⁻ bzw. Polysulfate, PO₄³⁻ bzw. Polyphopsphate verwendet. Besonders bevorzugt als Anionen sind CO₃²⁻, SO₄²⁻ bzw. Polysulfate und PO₄³⁻ bzw. Polyphopsphate.

Werden als Treibmittel(C) Silikate verwendet so handelt es sich bevorzugt um Schichtsilikate und besonders bevorzugt um Zeolithe.

Werden als Treibmittel (C) Proteine verwendet, so handelt es sich bevorzugt um Proteine mit einer hohen Tendenz zur Einlagerung von Flüssigkeiten, d.h. mit einem hohen Anteil an Wasserstoffbrückenbindungen unabhängig von der Sekundär- und Tertiärstruktur.

Werden als Treibmittel (C) Zucker verwendet, so handelt es sich bevorzugt um Dextrose und Polysaccharide.

Die am Treibmittel gebundenen Flüssigkeitsmoleküle werden ausgewählt aus der Gruppe enthaltend organische und anorganische Lösungsmittel. Bevorzugt werden diese Lösungsmittel ausgewählt aus der Gruppe enthaltend Wasser, Alkohole, Amine, THF, Pentan, Hexan, Toluol und Ether oder Mischungen davon. Besonders bevorzugtes Flüssigkeitsmolekül ist Wasser.

Bevorzugt sind hierbei Treibmittel, die Wasser bzw. Wasserdampf freisetzen, besonders bevorzugt wiederum jene, die Wasserdampf aus Kristall- oder Interchalatwasser erzeugen. Dies deshalb, weil 1. Wasserdampf positiv in den Haftmechanismus eingreift und 2. im Falle von Kristall- und Interchalatwasser die Dampffreisetzung kontrolliert und sanft geschieht und gleichzeitig mit dem Haftungsaufbau verläuft. Zudem ermöglichen diese Treibmittelklassen eine problemlose homogene Einarbeitung in die Siliconmatrix.

Der Gehalt der erfindungsgemäßen vernetzbaren Masse an Treibmittel (C) liegt bevorzugt im Bereich von 0,05 bis 15 Gew.-%, besonders bevorzugt bei 0,2 bis 1 Gew.-%.

Als Vernetzersystem (D) können alle bisher im Stand der Technik bekannten peroxidinduzierten oder Edelmetallkomplex-katalysierte additionsvernetzenden Systeme und Kondensationsvernetzungssysteme verwendet werden.

Erfolgt die Vernetzung der erfindungsgemäßen Zusammensetzungen mittels freier Radikale, werden als Vernetzungsmittel organische Peroxide, die als Quelle für freie Radikale dienen, eingesetzt. Beispiele für organische Peroxide sind Acylperoxide, wie Dibenzoylperoxid, Bis-(4-chlorbenzoyl)-peroxid, Bis-(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, Tert.-butylperoxy-isopropylcarbonat, Tert.-butylperoxy-isononanoat, Dicyclohexylperoxydicarbonat und 2,5-Dimethylhexan 2,5-diperbenzoat.

Es kann eine Art von organischem Peroxid, es kann auch ein Gemisch von mindestens zwei verschiedenen Arten von organischen Peroxiden eingesetzt werden.

Als die Anlagerung von Si-gebundenem Wasserstoff an aliphatische Mehrfachbindung fördernde Katalysatoren können auch bei dem erfindungsgemäßen Verfahren die gleichen katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H2O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H₂PtCl₆*6H₂O und Cyclohexanon, Platin-Vinyl-siloxankomplexe, wie Platin-1,3-Divinyl-1,1,3,3-tetra-methyl- disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Zur Haftausrüstung kommen Haftvermittler bzw. Haftsysteme als Kombination aus Komponente (E) und (F) zum Einsatz.

Als (E) können Silikatsalze oder niedermolekulare Silikatverbindungen bis hin zu monomeren Silanen, welche thermisch/hydrolytisch spaltbare O-R⁶-Bindungen oder Halogenreste aufweisen, verwendet werden. Bevorzugt sind Silane der allgemeinen Formel (1)

R²R³SiR⁴R⁵, (1)

wobei R², R³, R⁹, R⁵ ein organischer oder anorganischer Rest oder ein Substituent der Struktur -O-R⁶ oder Halogenrest sein kann, wobei R⁶ = H oder ein beliebiger organischer Rest bedeutet. Besonders bevorzugt bedeuten die Reste R², R³, R⁴, R⁵ eine vorgebildete kleine und leicht abspaltbare Abgangsgruppe, wie beispielsweise -OMe, -OEt, -OAc etc oder in reaktives Halogen, wie -Cl, -Br etc.

In einer weiteren Ausführungsform kann mindestens einer der Reste R², R³, R⁴ oder R⁵ durch ein -O- ersetzt sein und so zu einer niedermolekularen dreidimensionalen Fortführung der Silikat-Tetraederstruktur führen. Bevorzugt bestehen die niedermolekularen Silikatverbindungen aus bis zu 100 Si-O-Einheiten.

Der Gehalt der erfindungsgemäßen vernetzbaren Masse an Komponente (E) liegt im Bereich von 0,3 bis 30 Gew.-%, vorzugsweise bei 1 bis 10 Gew.-%.

Die Verbindungen (F) entsprechen bevorzugt der allgemeinen Formel (2)

R⁸R⁹(R¹⁰O) Si-OR¹¹ (2)

wobei R⁸, R⁹ beliebige organische oder anorganische Substituenten sein können, bevorzugt halogen- und/oder organosubstituierte lineare und verzweigte Siloxane mit 1 bis 10 Si-O-Einheiten, besonders bevorzugt organosubstituierte Siloxane mit durch Abgangsgruppen abgesättigten end- und seitständigen OH-Funktionen. R¹⁰ und R¹¹ können ebenfalls beliebige organische oder anorganische Verbindungen sein, jedoch mit der Maßgabe, dass mindestens einer von beiden eine vorgebildete Abgangsgruppe, also einen Substituenten -CH₃, -CH₂CH₃, -C(O)CH₃ etc. aufweist. Bevorzugt als Rest R¹⁰, R¹¹ sind daher kurzkettige organische Verbindungen, besonders bevorzugt Methyl-, Ethyl-, oder Acetylgruppen.

Der Gehalt der erfindungsgemäßen vernetzbaren Masse an Komponente (F) liegt im Bereich von 0,1 bis 20 Gew.-%, vorzugsweise bei 0,5 bis 5 Gew.-%.

Die genannten Verbindungen (E) können mit Verbindungen (F) zu höher kondensierten Haftsystemen reagieren.

Zur Einbindung in ein peroxidinduziertes oder platinkatalysiert additionsvernetztes System können die Verbindungen (B), (E) und (F) des Weiteren Vinylgruppen enthalten, z.B. als R² oder R⁸.

Die erfindungsgemäß eingesetzten Verbindungen (E) und (F) sind dem Fachmann bekannt und können z. T. käuflich erworben werden.

Als weitere Bestandteile der Zusammensetzung können für den Haftungsaufbau förderliche Verbindungen (G), wie Hydrosilane und Hydrosiloxane, Hydroxsiloxane, Glycidyloxypropyltrimethoxysilan (Glymo) etc. enthalten.

Auch Aktivatoren (H) können bei Bedarf in der Zusammensetzung vorhanden sein, welche das Vernetzungsverhalten der Haftpromotoren beschleunigen bzw. katalysieren. (H) umfasst daher alle Stoffe, als Einzelverbindung oder in beliebiger Kombination, welche bei einer basen- der säurekatalysierten Veresterung bzw. Umesterung als Start- oder Teilschritt einer Polykondensation als Base bzw. Säure wirken können. Bevorzugt sind hier milde Säuren und Basen in fester Form, wie Ammoniumsalze, Phosphate, Sulfate, Acetate etc. Die Aufgabe der Aktivatoren liegt in der Katalyse der Vernetzungsreaktion wie erwähnt; sie können aber auch durch Beeinflussung des pH-Wertes der Matrix zu einem beschleunigten Austreiben von Gasen aus den Treibmittelsystemen (z.B. CO₂ aus Carbonaten, Wasserdampf aus Einlagerungsverbindungen) führen, was eine Kopplung des Haftungsaufbaus und der Expansion durch die Aktivatoren ermöglicht.

Die erfindungsgemäß eingesetzten Ausgangsstoffe (H) sind dem Fachmann bekannt und können z. T. käuflich erworben werden.

Außer den Komponenten (A) bis (H) können die erfindungsgemäßen Zusammensetzungen noch alle weiteren Stoffe enthalten, die auch bisher zur Herstellung von siliconhaltigen Massen eingesetzt wurden, einschließlich solcher Stoffe, die bisher zur Verbesserung der Haftung und des Expansionsverhaltens verwendet wurden.

Die erfindungsgemäßen siliconhaltigen Massen können wahlweise als Bestandteil (I) weitere Zusätze zu einem Anteil von bis zu 10 Gew.-%, vorzugsweise 0,0001 bis 4 Gew.-%, enthalten, welche als Katalysator, Cokatalysator oder Initiator für Spaltungs- und Kondensationsreaktionen von O-R⁶-Bindungen wirken können, wie:
- Metall- oder Edelmetallkomplexe, bevorzugt tetraorganisch substituierte Komplexe, besonders bevorzugt tetraorganisch subtituierte Zinn-, Titan- und Zirkoniumkomplexe;
- Saure oder basische ionische und nichtionische Verbindungen, wie Alkali- und Erdalkalisalze von organischen und anorganischen Säuren und Basen, bevorzugt Acetate, Sulfonate, Sulfate und Phosphate bzw. Ammoniumsalze;
- alle weiteren anorganischen und organischen Verbindungen, welche in der Lage sind, O-R⁶-Bindungen zu destabilisieren, zu spalten oder deren Spaltung oder Destabilisierung zu katalysieren.

Die erfindungsgemäßen siliconhaltigen Massen können wahlweise als Bestandteil (K) weitere Zusätze zu einem Anteil von bis zu 70 Gew.-%, vorzugsweise 0,0001 bis 40 Gew.-%, enthalten. Diese Zusätze können z.B. inaktive Füllstoffe, mikrowellenaktive Füllstoffe zum gleichzeitigen Vulkanisieren und Expandieren durch gezielte Anregung, harzartige Polyorganosiloxane, die von den Siloxanen (A),(E),(F) verschieden (also nicht ursächlich haftvermittelnd) sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststofffasern, Kunststoffpulver, Metallstäube, Farbstoffe, Pigmente usw.

Enthalten sein können des weiteren Zusätze (L), die der gezielten Einstellung der Verarbeitungszeit, Anspringtemperatur und Vernetzungsgeschwindigkeit sowie der Reaktion auf Vernetzungsmethoden, wie UV- und IR-Strahlung etc., der erfindungsgemäßen Massen dienen.

Die erfindungsgemäßen Organopolysiloxanmassen können, falls erforderlich, in Flüssigkeiten gelöst, dispergiert, suspendiert oder emulgiert werden. Die erfindungsgemäßen Massen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Massen der Fall sein kann. Hinsichtlich der elastomeren Eigenschaften der vernetzten erfindungsgemäßen Siliconmassen wird gleichfalls das gesamte Spektrum umfasst, beginnend bei extrem weichen Silicongelen, über gummiartige Materialien bis hin zu hochvernetzten Siliconen mit glasartigem Verhalten.

Besonders bevorzugt sind Massen, welche die Verarbeitung in den Verfahren des Spritzgusses, der Extrusion, des Kalandrierens und der Beschichtung erlauben, d.h., Massen, welche gemeinhin als Flüssig- bzw. Festsilicon bzw. LSR oder HTV oder HCR bekannt sind bzw. für die Beschichtung auch Massen, welche unter RTV bzw. LSR bekannt sind.

Die Herstellung der erfindungsgemäßen siliconhaltigen Massen kann nach bekannten Verfahren erfolgen, wie beispielsweise durch gleichmäßige Vermischung der einzelnen Komponenten. Die Reihenfolge dabei ist beliebig. Die Vermischung erfolgt dabei abhängig von der Viskosität von (A) z.B. mit einem Rührer, in einem Disolver, auf einer Walze oder in einem Kneter. Der Füllstoff (B), die Additive (C),(D), (E) und (F) sowie falls gewünscht (G) bis (L) können auch in einem organischen Thermoplasten bzw. thermoplastischen Siliconharz verkapselt werden, mit der Maßgabe, dass an der Oberfläche des Partikels weiterhin Gruppen für Spaltungen von O-R⁶-Bindungen zugänglich sind.

Bei den erfindungsgemäß eingesetzten Komponenten (A) bis (L) kann es sich jeweils um eine einzelne Art einer solchen Komponente, wie auch um ein Gemisch aus mindestens zwei verschiedenen Arten einer solchen Komponente handeln.

Die erfindungsgemäßen Massen können bei Vorhandensein vernetzbarer Gruppen vernetzt (vulkanisiert) werden, wie die bisher bekannten vernetzbaren Massen. Vorzugsweise handelt es sich dabei um Temperaturen von 40 bis 220°C, besonders bevorzugt von 100 bis 190°C, und drucklos oder unter einem Druck von 900 bis 1100 hPa. Es können aber auch höhere oder niedrigere Temperaturen und Drücke angewendet werden. Die Vernetzung kann auch photochemisch mit energiereicher Strahlung, wie z.B. sichtbarem Licht mit kurzen Wellenlängen und UV-Licht, oder mit einer Kombination aus thermischer und photochemischer Anregung durchgeführt werden.

Ein weiterer Gegenstand der vorliegenden Erfindung sind expandierte Extrudate, Laminate und expandierte Verbund-Formkörper allgemein hergestellt durch Vernetzung und Expansion der erfindungsgemäßen Massen beispielsweise durch Extrusion, Kalandrieren, Überformen, Formgießen, Formpressen, Laminieren, Verkleben mit und ohne Druckeinwirkung.

Die erfindungsgemäßen Massen sowie die erfindungsgemäß daraus hergestellten expandierten Vernetzungsprodukte können für alle Zwecke eingesetzt werden, mit dem Vorteil ökonomischer, weitestgehend automatisierter, kontinuierlicher und fehlerminimierter Schaum-Verbundteilproduktion, für die auch bisher zu Elastomeren vernetzbare Organopolysiloxanmassen bzw. Elastomere verwendet wurden. Dies umfasst beispielsweise die Siliconschaumbeschichtung bzw. Imprägnierung beliebiger Substrate, die Herstellung von Schaum-Formteilen, z.B. im Spritzgussverfahren, Vakuumextrusionsverfahren, Extrusionsverfahren, Formgießen und Formpressen, Abformungen, die Verwendung als Dicht- Einbett- und Vergussmassen, Kleber, Laminate, Kalanderware, Verbund- und Formkörper -auch in mehrmaliger und/oder kombinierter Durchführung der Verarbeitungsmethoden, wie mehrmaliges Laminieren, Laminieren und Verkleben, Extrudieren und Überformen usw.

Die erfindungsgemäßen Massen haben den Vorteil, dass sie in einem einfachen Verfahren unter Verwendung leicht zugänglicher Ausgangsstoffe ohne die Gefahr gegenseitiger negativer Beeinflussung und damit wirtschaftlich und sicher hergestellt werden können.

Die erfindungsgemäßen Massen haben den Vorteil, dass sie aufgrund der kombinierten wärmeinduzierten Vernetzung und Expansion eine schnelle und wirtschaftliche Herstellung von expandierten Artikeln ermöglichen.

Die erfindungsgemäßen Massen haben den weiteren Vorteil, dass sie bei selbsthaftender Einstellung mittels geeigneter Additive (Haftpromotoren) das automatische, sichere und wirtschaftliche Herstellen von Verbundteilen, Laminaten und Kalanderware ohne Vorarbeiten und Vorbehandlung ermöglichen.

Die erfindungsgemäßen Massen haben den Vorteil, dass ihre geschäumten Vulkanisate aufgrund der niedrigen Wärmeleitfähigkeit der Silicone, welche durch Schäumen noch weiter erniedrigt wird, sehr gut wärme- oder kälteisolierend wirken. Daher sind sie für den Einsatz in isolierender- und Schutzbekleidung sehr gut geeignet.

Die erfindungsgemäßen Massen haben des weiteren den Vorteil, dass die expandierten vernetzten Massen am Elastomer-Endprodukt eine ausgezeichnete mechanische Belastbarkeit zeigen. So weist ein 2 mm dicker erfindungsgemäßer Schaumstreifen der Ausgangshärte 40 Shore A eine Normbruchdehnung von 1300% auf, wohingegen ein vergleichbarer Streifen aus CR nur 300% zeigt.. Ebenso sind der Zug- und Druckverformungsrest von Silicon wie auch seine dynamischen Eigenschaften (vgl. Tastaturmatten) bekanntermaßen sehr gut. So sind Vulkanisate aus den erfindungsgemäßen Massen bezüglich ihrer Dauerbelastbarkeit gegenüber CR überlegen. Der Compression Set von CR bei 100°C beträgt ca. 25%, wohingegen der Compression Set von Silicon bei 100°C kleiner als 5% ist. Dadurch verformen sich aus den erfindungsgemäßen Massen hergestellte Artikel, wie beispielsweise Tauchanzüge, auch während langen Tragens nicht dauerhaft und stellen sich innerhalb kurzer Zeit in ihre ursprüngliche Geometrie rück. Diese Hysterese verläuft bei CR wesentlich langsamer und endet verformungsabhängig meist nicht beim Ausgangspunkt. Der Tragekomfort und die Formstabilität von Bekleidung, welche aus den erfindungsgemäßen Massen hergestellt wird, ist also im Vergleich zu CR verbessert. Ebenso wird auch bei großer Kompression, wie etwa bei großer Tauchtiefe, der erfindungsgemäße Siliconschaum nicht dauerhaft komprimiert und verliert dadurch im Gegensatz zum CR nicht seine isolierenden Eigenschaften.

Die erfindungsgemäßen Massen haben des weiteren den Vorteil, dass ihre expandierten Vulkanisate eine komplett homogene Schaumstruktur und damit homogene Eigenschaften auch über sehr große Wandstärken, größer als 5 cm, aufweisen, und dies bei geschlossener, glatter Oberfläche.

Die erfindungsgemäßen Massen haben den Vorteil, dass sie halogenfrei sind und daher im Brandfall keine toxischen Verbrennungsprodukte freisetzen. Die Brandlast und Rauchgasdichte von Siliconen ist bekanntermaßen sehr niedrig. Eine schwerbrennbare Einstellung der erfindungsgemäßen Massen ist mittels geeigneter Additive und Füllstoffe möglich. Die erfindungsgemäßen Massen eignen sich daher hervorragend auch für die Herstellung von Schutzkleidung beispielsweise für den Feuerwehr- und Militärbereich.

Ein weiterer Vorteil der erfindungsgemäßen Massen ist die durch die hohe Oberflächenenergie des Silicons im Gegensatz zu CR gegebene wasserabstoßende Eigenschaft.

Ein weiterer entscheidender Vorteil der erfindungsgemäßen Massen ist die durch die Verwendung von Silicon gegebene enorme Gas- und Dampfdurchlässigkeit, somit die Atmungsaktivität der aus ihnen hergestellten Vulkanisate. So beträgt die Luftdurchlässigkeit von CR bei 60°C etwa 70x10⁻⁹ cm²s⁻¹hpa⁻¹, während Silicon bei gleichen Bedingungen einen Wert von etwa 3500x10⁻⁹ cm²s⁻¹hPa⁻¹ aufweist. Die Gasdurchlässigkeit der erfindungsgemäßen Massen liegt also um den Faktor 40 bis 50 über jener des CR, die Wasserdampfdurchlässigkeit ist sogar noch höher. In Verbindung mit der erwähnten Wasserabstoßung des Silicons kann man also von einer echten hautähnlichen Atmungsaktivität sprechen, da zusätzlich zum Lufttransport von außen kommende Nässe ferngehalten, von innen kommender Dampf aber nach außen transportiert wird.

Die erfindungsgemäßen Massen haben den Vorteil, dass sie in einem einfachen Verfahren unter Verwendung leicht zugänglicher Ausgangsstoffe und damit wirtschaftlich hergestellt werden können.

Die erfindungsgemäßen Massen haben ebenfalls den Vorteil, dass sie sowohl edelmetallkatalysiert als auch peroxidinduziert vernetzt werden können, da die zum Aufbau der Haftung notwendigen Additive (E) und (F) sowie die Treibmittel (C) gegenüber Peroxiden weitgehend unempfindlich sind.

Die erfindungsgemäßen Massen haben des weiteren den Vorteil, dass die ohne Verwendung von Vorbehandlungen, Primerauftrag oder mechanischen Hilfsmitteln trotz der durch die Expansion verminderten Kontaktfläche sehr gut auf Substraten haften.

Die erfindungsgemäßen Massen haben des weiteren den Vorteil, dass diese Haftung sich sehr rasch aufbaut, typischerweise im Minutenbereich für die sogenannte Transporthaftung, die für ablösungsfreien Abzug aus dem Heizkanal bzw. Zerstörungsfreie Entformung aus einer Form bzw. zum Transport des Verbundteils notwendig ist.

Die erfindungsgemäßen Massen haben des weiteren den Vorteil, dass diese Transporthaftung bereits sehr hoch liegt, teilweise im Bereich der Reißfestigkeit oder Bruchlast eines der Verbundpartner.

Die erfindungsgemäßen Massen haben des weiteren den Vorteil, dass die Haftung sich mit der Zeit meist durch Lagerung oder Temperung weiter verstärkt.

Die erfindungsgemäßen Massen haben des weiteren den Vorteil, dass die Haftung sich mit dem Altern des Materials nicht abbaut, d.h., dass keine dem Material vorauseilende Alterung des Verbunds auftritt.

Die erfindungsgemäßen Massen haben des weiteren den Vorteil, dass die Haftung sich bei Bedarf auch drucklos aufbaut, d.h., dass ein Verbund ohne Anpressen oder weitere aufwändige Prozessschritte zustande kommt.

Die erfindungsgemäßen Massen haben des weiteren den Vorteil, dass die vernetzten Massen am Elastomer-Endprodukt auch bei hohen Anteilen an Additiven (D), (E) und (F) keine wesentliche Verschlechterung von mechanischen oder anderen physikalischen Eigenschaften im Vergleich zu nicht selbsthaftend eingestellten Massen zeigen. Dies ist durch die morphologische Ähnlichkeit der Additive mit der Siliconbasis (A) und (B) bzw. mit der pigmentähnlichen Unlöslichkeit einiger Additive in der Matrix zu erklären, welche nicht zu negativen Seiten- oder Entmischungseffekten führt.

Die erfindungsgemäßen Massen haben des weiteren den Vorteil, dass ihre vernetzten Vulkanisate bei geeigneter Wahl der Additive im direkten Kontakt mit Lebensmitteln oder sogar der Haut verwendet werden können, so dass keine aufwändigen zusätzlichen Beschichtungen oder Träger verwendet werden müssen, um direkten Kontakt zu vermeiden, und somit die Massen selbst als lebensmittelzugelassene bzw. hypoallergene Beschichtungen nicht lebensmittelgeeigneter bzw. nicht Hautkontakt-geeigneter Substrate dienen können.

Die erfindungsgemäßen Massen haben den Vorteil, dass sie im Vergleich zu nicht selbsthaftenden expandierbaren Materialien ebenso rasch expandieren und eine ebenso niedrige Dichte aufweisen, d.h., dass die enthaltenen Additive das Expansionsverhalten nicht negativ beeinflussen.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiele

### Substrate

Die Haftung der erfindungsgemäßen Siliconelastomere wurde auf folgenden Substraten getestet:
Polyamid (PA): Ultramid® A3EG6 (BASF AG)
Aluminium (Industriequalität; nicht grundiert, nicht eloxiert) Stahl: V2A-Stahl (Industriequalität)

### Beispiel 1: Herstellung einer erfindungsgemäßen Masse und Simulation der Haftung bei Coextrusion

1000 Gramm eines Poly(dimethyl-methylvinyl)siloxans mit einer mittels ²⁹Si-NMR bestimmten mittleren Kettenlänge 800 Si-O-Einheiten (Wacker Chemie AG) werden vorgelegt und portionsweise mit 240 Gramm einer hydrophilen Kieselsäure mit einer BET-Oberfläche von ca. 300 m²/g (Wacker Chemie AG) in einem Sigma-Kneter bei 120°C homogen vermischt. Nach Abkühlen auf RT werden 50 Gramm eines 3:1:1-Gemisches aus Tetraethylsilikat, Methyltriethoxysilan und Dimethyldiethoxysilan (alle Wacker Chemie AG) gelöst in 100 ml Ethanol zugegeben und unter Vakuum bei 40°C weiter geknetet, bis das Ethanol restlos verdampft ist. In die entstandene Mischung werden 18 Gramm Natriumpyrophosphat und 10 Gramm Natriumhydrogenbarbonat, sowie 5 Gramm Natriumhydrogensulfat (alle Merck KgAA) unter Kühlung eingeknetet. Die entstandene Formulierung wird nun auf der Walze bei RT mit Vernetzungsadditiven zur Vulkanisation versehen und auf die unten beschrieben Probekörper als Streifen aufgebracht und wie unten beschrieben vulkanisiert und die Probekörper getestet. Die Trennkräfte sind in Tabelle 1 angegeben. Die Masse weist nicht expandiert eine mittlere Shore-A-Endhärte von 70 auf und vulkanisiert drucklos unter Bildung einer homogenen Schaumstruktur mit geschlossener Oberfläche. Die Schaumhärte beträgt ca. 20 Shore A.

### Charakterisierung der Haftung eines die Coextrusion simulierenden Probekörpers (hergestellt gem. Beispiel 1)

Zur Charakterisierung der Haftfestigkeit werden 100,0 g der in den folgenden Beispielen hergestellten Elastomermasse als ca. 6 mm dicke Schicht auf die zuvor mit Aceton gereinigte Oberfläche des Substrates (Prüfkörpergröße ca. 20x60 mm, an beiden Enden jeweils ca. 10 mm abgeklebt, um an dieser Stelle eine Verbundbildung zu unterdrücken) je nach Viskosität mit einem Rakel aufgebracht oder als vorgeformter Streifen aufgelegt. Der entstandene Verbundkörper wird nun bei einer Temperatur von 200°C während 5 min in einem Umluft-Trockenschrank vulkanisiert, wobei eine vollständige Expansion und Vernetzung der Elastomermasse erfolgt; anschließend wird auf Raumtemperatur abgekühlt. Mittels einer Zugdehnungsmaschine wird dann die maximale Kraft gemessen, die im Schälversuch notwendig ist, um Elastomer- und Substratkörper vollständig voneinander zu trennen, d.h., den Haftverbund aufzulösen. Die Bestimmung der Trennkraft erfolgt gemäß DIN 53531 und wird in N/mm angegeben. Je Beispiel werden 5 Prüfkörper gemessen, die Abrissspannung als Mittelwert bestimmt und der Anteil an kohäsivem Versagen in Prozent ermittelt. Kohäsives Versagen von 0% bedeutet, dass das Siliconelastomer vollständig und rückstandsfrei von der Substratoberfläche abgelöst wurde. Kohäsives Versagen von 100% (Idealfall) bedeutet, dass die Trennung ausschließlich durch Risswachstum innerhalb des Siliconelastomers oder des Substrats erfolgte.

### Beispiel 2: Herstellung einer erfindungsgemäßen Masse und Simulation der Haftung bei der Formartikelherstellung

Eine Formulierung gemäß Beispiel 1 wird in einem Dissolver mit 22 Gramm Glymo (Degussa AG) und 40 Gramm eines Si-H-haltigen Polydiphenylsiloxan-Vernetzers (Wacker Chemie AG) vermischt. Die entstandene Formulierung wird anschließend ebenfalls im Dissolver bei RT mit Vernetzungsadditiven zur Vulkanisation versehen und in einer Stahl-Testform auf 2x6 cm große Probekörper -mit Abklebungen wie in Beispiel 1- bei 135 °C für 7 min aufvulkanisiert. Anschließend werden die Probekörper getestet. Die Trennkräfte sind in Tabelle 1 angegeben. Die Masse weist nicht expandiert eine mittlere Shore-A-Endhärte von 60 auf und zeigt bei ca. 50%iger Unterfüllung der Form eine komplette Füllung der Form durch Expansion und eine homogene Schaumstruktur mit geschlossener Oberfläche. Die Schaumhärte beträgt ca. 10 Shore A.

Die Tabelle 1 zeigt die Ergebnisse der Trennkraft in [N/mm] sowie den Anteil kohäsiven Versagens in [%] für die erfindungsgemäße Massen gemäß Beispiel 1 und 2 platinkatalysiert additionsvernetzt, expandiert auf 3 verschiedenen Substraten.

**Tabelle 1**

| Beispiel | PA | | Aluminium | | V2A-Stahl | |
|---|---|---|---|---|---|---|
| | [N/mm] | [%] | [N/mm] | [%] | [N/mm] | [%] |
| Coextrusion simul. mit Masse aus Beisp. 1 | 6,3 | 90 | 8,2 | 100 | 8,0 | 100 |
| Moulding mit Masse aus Beisp. 2 | 6,5 | 100 | 6,2 | 90 | 6,0 | 90 |

Die in Tabelle 1 angegebenen Werte belegen die hohe Haftfestigkeit von Coextrudaten und Formverbundteilen, bestehend aus dem erfindungsgemäßen additionsvernetzten Siliconelastomer und organischen Kunststoffen bzw. Metallen.

### Beispiel 3: Herstellung einer schäumbaren und vulkanisierbaren Siliconmasse, welche auf typischen Faserarten selbsthaftend verarbeitbar ist

1000 Gramm eines Poly(dimethyl-methylvinyl)siloxans mit einer mittels ²⁹Si-NMR bestimmten mittleren Kettenlänge von 800 Si-O-Einheiten (Wacker Chemie AG) werden vorgelegt und portionsweise mit 240 Gramm einer hydrophilen Kieselsäure mit einer BET-Oberfläche von ca. 300 m²/g (Wacker Chemie AG) in einem Sigma-Kneter bei 120°C homogen vermischt. Nach Abkühlen auf RT werden 50 Gramm eines 3:1:1-Gemisches aus Tetraethylsilikat, Methyltriethoxysilan und Dimethyldiethoxysilan (alle Wacker Chemie AG) gelöst in 100 ml Ethanol zugegeben und unter Vakuum bei 40°C weiter geknetet, bis das Ethanol restlos verdampft ist. Die entstandene Mischung wird auf der Walze oder im Kneter mit Vulkanisationsadditiven für die platinkatalysierte Additionsvernetzung sowie 12 Gramm des Kristallwasser-basierten Treibbatches ELASTOSIL® AUX BTB (Hersteller: Wacker Chemie AG, München) versehen.

### Beispiel 4: Herstellung eines Halbzeugs (Laminat bzw. geschäumte Bahn) für die weitere Verwendung in der Bekleidungsindustrie

Die verarbeitungsfähige Mischung aus Beispiel 3 wird kontinuierlich auf einem Kalander homogenisiert, auf 0,5 mm Dicke gebracht und unter leichtem Andruck auf ein unbehandeltes Polyester-Gewebe kaschiert. Anschließend erfolgt ein Transport durch einen auf eine Effektivtemperatur von 160°C eingestellten Heißluft-Heizkanal; die Verweilzeit im Kanal beträgt vier Minuten. Das erhaltene mit Gewebe kaschierte Extrudat ist homogen auf 1 mm Dicke aufgeschäumt und haftet optimal direkt auf dem Gewebe, so dass sich eine Trennung nur unter Zerstörung des Gummis bzw. des Gewebes erreichen ließe.

### Beispiel 5: Herstellung einer dünnen, beidseitig textilkaschierten Siliconschaum-Platte zur Fertigung von Wetsuits (Tauch-, Surf-, Schwimmanzüge)

Die verarbeitungsfähige Mischung aus Beispiel 3 wird kontinuierlich auf einem Kalander homogenisiert, auf 0,6 mm Dicke gebracht und unter leichtem Andruck von oben auf ein unbehandeltes Polyamid/Elastan-Gewebe (Lycra®, DuPont) kaschiert. Direkt folgend wird von oben auf das Laminat eine weitere Lycra-Bahn unter leichtem Andruck mit Hilfe einer Rolle (Walze) aufgebracht. Anschließend erfolgt der Transport durch einen auf eine Effektivtemperatur von 170°C eingestellten Heißluft-Heizkanal; die Verweilzeit im Kanal beträgt fünf Minuten. Das erhaltene, beidseitig mit Gewebe kaschierte Extrudat ist homogen auf 1,1 mm Dicke aufgeschäumt und haftet optimal direkt auf beiden Geweben.

### Beispiel 6: Herstellung einer schäumbaren und vulkanisierbaren Siliconmasse, welche schwerbrennbar ist, sowie Herstellung eines Laminats mit Hilfe dieser Masse

Eine Mischung gemäß Beispiel 3 wird kurz vor der weiteren Verarbeitung mit 2% ELASTOSIL® AUX SB-2 (Wacker Chemie AG, München) auf einer Walze homogen vermischt. Die Mischung wird auf einer Walze auf eine Felldicke von 1 mm gebracht. Dann wird eine mit ELASTOSIL® LR 3153 (Wacker Chemie AG, München) vorbehandelte Polyaramid-Gewebebahn (Twaron®, Teijin-Twaron) mit durch den Walzenspalt geschleust, so dass das Fell auf das Gewebe aufzieht. Das Laminat wird in einen Wärmeofen bei 250°C für 7 Minuten gelagert. Nach Abkühlen wird aus dem entstandenen Schaumlaminat von 2 mm Dicke ein Normteststreifen ausgeschnitten und gemäß UL 94 geprüft. Das Laminat zeigt eine Klassifizierbarkeit von UL 94 V-0 bei 2 mm (sehr schwer brennbar) und ist daher für den Einsatz in Brandschutzkleidung geeignet.

## Patentansprüche

1. Siliconzusammensetzung enthaltend
(A) mindestens eine siliciumorganische Verbindung welche Reste aufweist, die zur Vernetzung geeignet sind,
(B) mindestens einen verstärkenden Füllstoff ausgewählt aus der Gruppe enhaltend behandelte oder unbehandelte pyrogene oder gefällte Kieselsäure,
(C) mindestens ein Treibmittel,
(D) mindestens ein geeignetes Vernetzungssystem ausgewählt aus der Gruppe enthaltend Kondensationsvernetzung, peroxidinduzierte oder Edelmetallkomplex-katalysierte Additionsvernetzung,
(E) zumindest ein Silikat mit thermisch oder hydrolytisch spaltbaren Abgangsgruppen O-R⁷, ausgewählt aus der Gruppe enthaltend Silikatsalze oder niedermolekulare Silikatverbindungen, wobei R⁷ ein H, ein organischer Rest oder statt O-R⁷ ein Halogen als Abgangsgruppe bedeutet,
(F) zumindest ein harzbildendes Monomer oder Oligomer mit linearer Struktur, mit der Maßgabe, dass Silikate nicht umfasst sind,
**dadurch gekennzeichnet, dass** als Treibmittel (C) eine Verbindung enhaltend Interchalat- oder Kristallflüssigkeit verwendet wird, ausgewählt wird aus der Gruppe enthaltend,
- Salze,
- Silikate,
- Proteine, und
- Zucker.

2. Siliconzusammensetzung gemäß Anspruch 1, **dadurch gekennzeichnet, dass** (A) eine aliphatisch ungesättigte Organosiliciumverbindung ist.

3. Verfahren zur Herstellung von Siliconzusammensetzungen nach einem der Ansprüche 1 oder 2, **dadurch gekennzeichnet, dass** die Komponenten (A) bis (E) gleichmäßig miteinander vermischt werden.

4. Verfahren zur Herstellung von expandierten Vernetzungsprodukte aus Siliconzusammensetzungen gemäß einem der Ansprüche 1 oder 2 durch Vernetzung und Expansion durch Extrusion, Kalandrieren, Überformen, Formgießen, Formpressen, Laminieren, Verkleben.

5. Expandierte Vernetzungsprodukte durch Vernetzung und Expansion der Siliconzusammensetzung gemäß einem der Ansprüche 1 oder 2.

6. Expandierte Laminate durch Vernetzung und Expansion der Siliconzusammensetzung gemäß einem der Ansprüche 1 oder 2 und Laminieren, Verkleben, Laminieren und Verkleben in einfacher oder mehrfacher Durchführung der vorgenannten Verarbeitungsmethoden oder deren Kombination.

## Claims

1. Silicone composition comprising
(A) at least one organosilicon compound having radicals suitable for crosslinking,
(B) at least one reinforcing filler selected from the group containing treated or untreated fumed or precipitated silica,
(C) at least one blowing agent,
(D) at least one suitable crosslinking system selected from the group containing condensation crosslinking, peroxide-induced or noble metal complex-catalyzed addition crosslinking,
(E) at least one silicate having thermally or hydrolytically cleavable leaving groups O-R⁷, selected from the group containing silicate salts or low molecular weight silicate compounds, where R⁷ is an H, an organic radical or in place of O-R⁷ a halogen as leaving group,
(F) at least one resin-forming monomer or oligomer having a linear structure, with the proviso that silicates are not included,
**characterized in that** use is made as blowing agent (C) of a compound containing intercalated liquid or liquid of crystallization, selected from the group containing
- salts,
- silicates,
- proteins, and
- sugars.

2. Silicone composition according to Claim 1, **characterized in that** (A) is an aliphatically unsaturated organosilicon compound.

3. Process for preparing silicone compositions according to either of Claims 1 and 2, **characterized in that** components (A) to (E) are mixed uniformly with one another.

4. Process for producing expanded crosslinking products from silicone compositions according to either of Claims 1 and 2 by crosslinking and expansion through extrusion, calendering, overmolding, mold casting, compression molding, laminating, adhesive bonding.

5. Expanded crosslinking products by crosslinking and expansion of the silicone composition according to either of Claims 1 and 2.

6. Expanded laminates by crosslinking and expansion of the silicone composition according to either of Claims 1 and 2 and laminating, adhesive bonding, laminating and adhesive bonding in single or multiple implementation of the aforesaid processing methods or combination thereof.

## Revendications

1. Composition de silicone contenant
(A) au moins un composé organosilicié qui comporte des radicaux qui sont appropriés à la réticulation,
(B) au moins une charge de renfort choisie dans le groupe contenant de l'acide silicique pyrogéné ou précipité, traité ou non traité,
(C) au moins un agent d'expansion,
(D) au moins un système de réticulation approprié, choisi dans le groupe comportant la réticulation par condensation, la réticulation par addition induite par un peroxyde ou catalysée par un complexe de métal noble,
(E) au moins un silicate comportant des groupes partants O-R⁷ séparables par hydrolyse ou par voie thermique, choisi dans le groupe contenant des sels de type silicate ou des composés de type silicate de faible masse moléculaire, R⁷ représentant un H, un radical organique ou au lieu de O-R⁷ un halogène en tant que groupe partant,
(F) au moins un monomère ou oligomère générateur de résine, à structure linéaire, étant entendu que les silicates ne sont pas compris,
**caractérisée en ce qu'**on utilise comme agent d'expansion (C) un composé contenant un liquide de cristallisation ou d'intercalation, choisi dans le groupe contenant
- des sels,
- des silicates,
- des protéines, et
- des sucres.

2. Composition de silicone selon la revendication 1, **caractérisée en ce que** (A) est un composé organosilicié à insaturation aliphatique.

3. Procédé pour la préparation de compositions de silicone selon l'une quelconque des revendications 1 et 2, **caractérisé en ce qu'**on mélange uniformément entre eux les composants (A) à (E).

4. Procédé pour la production de produits de réticulation expansés à partir de compositions de silicone selon l'une quelconque des revendications 1 et 2, par réticulation et expansion, par extrusion, calandrage, surmoulage, coulée en moule, moulage par compression, stratification, collage.

5. Produits de réticulation expansés, par réticulation et expansion de la composition de silicone selon l'une quelconque des revendications 1 et 2.

6. Stratifiés expansés par réticulation et expansion de la composition de silicone selon l'une quelconque des revendications 1 et 2 et stratification, collage, stratification et collage en exécution simple ou multiple des méthodes de mise en oeuvre précitées ou de leur combinaison.
